# FASCICULE DE BREVET EUROPEEN

(11) **EP 3 315 285 B1**
(45) Date de publication et mention de la délivrance du brevet: **22.09.2021**
(21) Numéro de dépôt: 17199043.5
(22) Date de dépôt: 27.10.2017
(51) Int. Cl.: F24F 13/02, F16L 11/11, F16L 11/12, F16L 27/11, B29C 48/00

(54) **GAINE D'AIR, NOTAMMENT POUR UN DISPOSITIF DE CLIMATISATION DESTINÉ À ÉQUIPER UN VÉHICULE FERROVIAIRE, ET PROCÉDÉ DE FABRICATION D'UNE TELLE GAINE**
LUFTLEITUNG, INSBESONDERE FÜR EINE KLIMATISIERUNGSVORRICHTUNG, DIE ZUR AUSRÜSTUNG EINES SCHIENENFAHRZEUGS BESTIMMT IST, SOWIE VERFAHREN ZUR HERSTELLUNG EINER SOLCHEN LEITUNG
AIR DUCT, IN PARTICULAR FOR AN AIR CONDITIONING DEVICE OF A RAILWAY VEHICLE, AND MANUFACTURING PROCESS OF SUCH A DUCT

(30) Priorité: 28.10.2016 FR 1660484
(43) Date de publication de la demande: 02.05.2018
(73) Titulaire: ALSTOM Transport Technologies, 93400 Saint-Ouen (FR)
(72) Inventeur: KLINCKEMAILLIE, Vincent, 62144 Mont Saint Eloi (FR)
(74) Mandataire: Lavoix

(56) Documents cités:
- EP-A1- 2 131 114
- FR-A- 1 538 183
- US-A- 4 000 341

## Description

La présente invention concerne une gaine d'air, notamment pour un dispositif de climatisation, plus particulièrement destiné à équiper un véhicule ferroviaire.

Des exemples de gaines d'air sont décrits dans FR 1 538 183, US 4 000 341 ou EP 2 131 114.

Une telle gaine d'air est destinée à former une interface mécanique entre une unité de climatisation et un amortisseur de bruit, notamment agencé au plafond d'une salle de véhicule ferroviaire.

On connait déjà dans l'état de la technique une gaine d'air, comprenant une conduite flexible. Cette conduite flexible est réalisée en tissus satin enduit de polyuréthane ignifugé.

La flexibilité de la conduite permet d'ajuster la gaine d'air aux dispersions de montage des différents composants du dispositif de climatisation.

Afin d'éviter un affaissement, la conduite flexible en tissus de l'état de la technique comporte généralement des coutures de renforcement. Toutefois, de telles coutures de renforcement sont difficiles à mettre en place, et peuvent entrainer des fuites d'air lorsqu'elles ne sont pas effectuées correctement.

Par ailleurs, le dimensionnement d'une telle conduite flexible en tissus est parfois mal maîtrisé, une sur-longueur pouvant provoquer une restriction du passage d'air, donc une diminution du débit d'air et une dégradation des performances du dispositif de climatisation.

L'invention a notamment pour but de remédier à ces inconvénients, en fournissant une gaine d'air dont la fiabilité est améliorée, sans augmenter notablement le coût d'une telle gaine d'air en comparaison avec le coût d'une gaine de l'état de la technique.

A cet effet, l'invention a notamment pour objet une gaine d'air, notamment pour un dispositif de climatisation, comportant une conduite flexible présentant un profil ondulé, caractérisée en ce que la conduite flexible est réalisée en silicone extrudé.

La conduite souple selon l'invention présente une bonne souplesse, notamment grâce à son profil ondulé, et permet donc une latitude satisfaisante d'ajustement lors du montage de la gaine d'air dans un dispositif de climatisation.

La conduite souple en silicone est particulièrement avantageuse en ce qu'elle peut être utilisée dans une large gamme de températures, notamment entre -60°C et 200°C, ce qui permet une utilisation de la gaine dans de nombreuses configurations, aussi bien en intérieur qu'en extérieur d'un véhicule ferroviaire, même en conditions climatiques sévères.

La conduite souple selon l'invention ne nécessite pas d'opération de couture pour résister à l'affaissement. Ainsi, la réalisation de la gaine selon l'invention nécessite moins de main d'œuvre que dans l'état de la technique. En outre, l'étanchéité de la gaine à l'air est assurée, cette étanchéité ne risquant notamment pas d'être détériorée par une couture.

En outre, la conduite souple en silicone est également étanche à l'eau.

Il convient de noter que le coût de réalisation d'une gaine d'air selon l'invention est sensiblement équivalent au coût de réalisation d'une gaine d'air de l'état de la technique.

Une gaine d'air selon l'invention peut comporter en outre l'une ou plusieurs des caractéristiques suivantes, prises seules ou selon toutes combinaisons techniquement envisageables.
- Le silicone présente une dureté d'environ 70 shores.
- La conduite flexible présente une forme générale en accordéon.
- La conduite flexible comporte une peau circonférentielle, s'étendant circonférentiellement entre une première extrémité circonférentielle et une seconde extrémité circonférentielle, les première et seconde extrémités circonférentielles étant reliées entre elles, notamment par vulcanisation.
- La peau circonférentielle comporte au moins une ouverture circonférentielle, de préférence deux ouvertures circonférentielles, s'étendant circonférentiellement entre une première embouchure à la première extrémité circonférentielle, et une seconde embouchure à la seconde extrémité circonférentielle, les première et seconde embouchures étant destinées à recevoir un pion de centrage commun.
- La conduite flexible présente une section transversale de forme générale rectangulaire.
- La conduite flexible s'étend longitudinalement entre une première extrémité longitudinale et une seconde extrémité longitudinale, chacune reliée à un cadre d'extrémité respectif.
- La conduite flexible comporte une jupe circonférentielle à chacune de ses première et seconde extrémités longitudinales, et chaque cadre d'extrémité comporte des languettes destinées à être recouvertes par la jupe circonférentielle correspondante et à être reliées à cette jupe circonférentielle.

L'invention concerne également un procédé de fabrication d'une gaine d'air telle que définie précédemment, caractérisé en ce qu'il comporte la réalisation de la conduite flexible par extrusion de silicone.

L'invention sera mieux comprise à la lecture de la description qui va suivre, donnée uniquement à titre d'exemple et faite en se référant aux figures annexées, parmi lesquelles :
- La figure 1 est une vue en éclaté de profil d'une gaine d'air selon un exemple de mode de réalisation de l'invention ;
- La figure 2 est une demi-vue en coupe longitudinale d'une conduite flexible de la gaine d'air de la figure 1 ;
- La figure 3 est une vue en perspective de la conduite flexible de la figure 2.

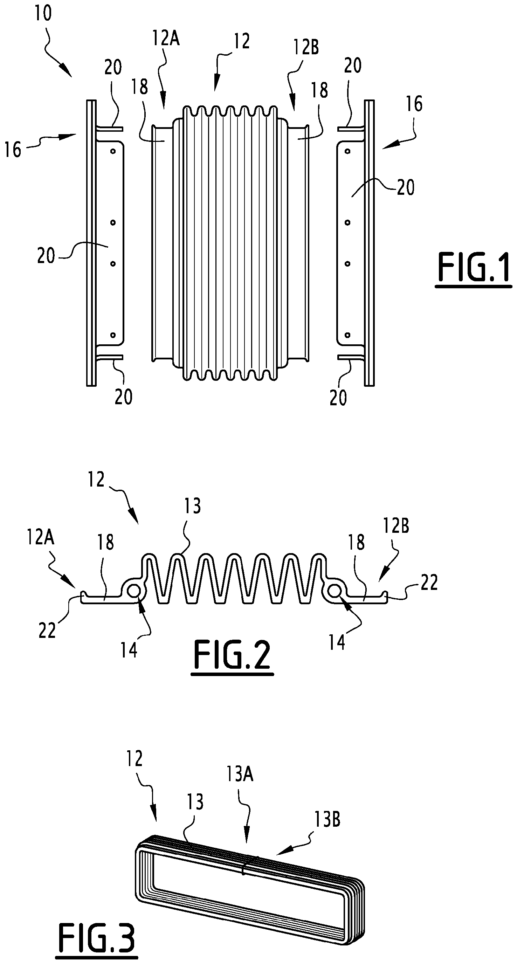

On a représenté, sur la figure 1, une gaine d'air 10 selon un exemple de mode de réalisation de l'invention. La gaine d'air 10 est destinée à équiper un dispositif de climatisation, plus particulièrement pour un véhicule ferroviaire. Une telle gaine d'air 10 est destinée à former une interface mécanique entre une unité de climatisation et un amortisseur de bruit.

La gaine d'air 10 comporte une conduite flexible 12, s'étendant longitudinalement entre une première extrémité 12A et une seconde extrémité 12B.

La conduite flexible 12 est réalisée en silicone extrudé.

Avantageusement, le silicone présente une dureté d'environ 70 shores.

Avantageusement, le silicone est choisi pour respecter les requis Feux/Fumées imposés par la norme R1 HL3/EN 45545-2.

La conduite flexible 12 est formée par une peau extrudée 13 s'étendant depuis une première extrémité circonférentielle 13A jusqu'à une seconde extrémité circonférentielle 13B (visibles sur la figure 3), la peau 13 étant repliée sur elle-même de manière à relier les première 13A et seconde 13B extrémités circonférentielles entre elles.

Par exemple, les première 13A et seconde 13B extrémités circonférentielles sont assemblées entre elles par vulcanisation, ou en variante par collage.

Avantageusement, la peau circonférentielle 13 comporte au moins une ouverture circonférentielle 14, de préférence deux ouvertures circonférentielles 14, s'étendant circonférentiellement entre une première embouchure débouchant à la première extrémité circonférentielle 13A, et une seconde embouchure débouchant à la seconde extrémité circonférentielle 13B.

Ces première et seconde embouchures sont destinées à recevoir un pion de centrage commun. Ainsi, lorsque la peau 13 est repliée, les première et seconde embouchures se trouvent l'une en regard de l'autre.

Les première et seconde embouchures permettent, avec le pion de centrage, d'assurer le bon positionnement des première 13A et seconde 13B extrémités circonférentielles l'une par rapport à l'autre lors de leur assemblage.

Avantageusement, la conduite flexible 12, lorsque les première 13A et seconde 13B extrémités circonférentielles sont assemblées, présente une forme générale à section transversale de forme générale rectangulaire. En d'autres termes, la conduite flexible 12 délimite un passage d'air de forme générale rectangulaire.

Par ailleurs, la conduite flexible 12 présente un profil ondulé. En d'autres termes, la peau 13 présente, entre ses première 12A et seconde 12B extrémités longitudinales, une pluralité d'ondulations, comme cela est représenté sur la figure 2. Par exemple, les ondulations sont alignées, parallèlement les unes par rapport aux autres, entre les deux ouvertures circonférentielles 14.

Les ondulations sont par exemple formées par des plis, si bien que la conduite flexible 12 présente une forme générale en accordéon.

Cette forme ondulée permet une bonne flexibilité de la conduite flexible 12.

La gaine d'air 10 comporte par ailleurs deux cadres d'extrémités 16, chacun destiné à être assemblé avec l'une respective des première 12A et seconde 12B extrémités longitudinales.

A cet effet, la conduite flexible 12 comporte une jupe circonférentielle 18 respective à chacune de ses première 12A et seconde 12B extrémités, et chaque cadre d'extrémité 16 comporte des languettes 20 destinées à être recouvertes par la jupe circonférentielle 18 correspondante et à être reliées à cette jupe circonférentielle 18.

Par exemple, chaque cadre d'extrémité 16 comporte quatre languettes 20, chacune s'étendant le long d'un côté respectif d'un rectangle, correspondant à la forme rectangulaire de la section transversale de la conduite flexible 12.

Chaque jupe circonférentielle 18 présente un rebord 22, visible sur la figure 2, et destiné à venir en contact d'une surface complémentaire du cadre 16, encadrant les languettes 20. Ce rebord 22 permet d'améliorer l'étanchéité de la liaison entre le cadre 16 correspondant et la conduite 12.

La gaine d'air 10 selon l'invention est réalisée par un procédé de fabrication qui va maintenant être décrit.

Le procédé de fabrication comporte une étape de réalisation de la peau 13, par extrusion de silicone.

La peau 13 est ainsi extrudée depuis sa première extrémité circonférentielle 13A jusqu'à sa seconde extrémité circonférentielle 13B, avec une section perpendiculaire à la direction d'extrusion telle que représentée que la figure 2.

Le procédé comporte ensuite une étape de réalisation de la conduite 12, au cours de laquelle la peau 13 est repliée sur elle-même pour former cette conduite 12.

A cet effet, les première 13A et seconde 13B extrémités circonférentielles sont amenées l'une en regard de l'autre, et des pions de centrage sont insérés dans les orifices 14 de l'une de ces extrémités circonférentielles. Ces mêmes pions de centrage sont ensuite amenés dans les orifices de l'autre de ces extrémités circonférentielles, afin d'assure un bon alignement de ces extrémités circonférentielles.

Les première 13A et seconde 13B extrémités circonférentielles sont ensuite reliées entre elles, notamment par vulcanisation ou par collage.

Le procédé comporte ensuite l'assemblage de la conduite 12 avec les cadres 16. Au cours de cet étage d'assemblage, chaque jupe 18 est agencée autour des languettes 20 du cadre 16 correspondant.

La gaine d'air 10 ainsi réalisée peut être rapportée dans un dispositif de climatisation, de manière classique.

La gaine d'air 10 selon l'invention présente une flexibilité optimale permettant une latitude d'ajustement optimale lors de l'agencement de cette gaine d'air 10 dans le dispositif de climatisation. L'amplitude d'ajustement de la gaine d'air 10 est notamment particulièrement importante grâce à la forme en accordéon de la conduite 12.

Par ailleurs, la conduite 12 en silicone présente une bonne étanchéité, et notamment une bonne étanchéité à l'eau du fait que le silicone est hydrophobe.

Par ailleurs, la conduite 12 selon l'invention présente une bonne résistance à l'affaissement, sans nécessiter d'opération de consolidation particulière.

On notera enfin que la gaine d'air 10 selon l'invention peut être utilisée dans une large gamme de conditions climatiques, notamment entre -60°C et +200°C.

L'invention n'est pas limitée au mode de réalisation précédemment décrit, et pourrait présenter diverses variantes, dans la limite de l'étendue de la protection définie par les revendications.

En particulier, la gaine 10 pourrait être utilisée en dehors du dispositif de climatisation. Par exemple, une telle gaine 10 pourrait former une portion de conduit d'un dispositif de refroidissement d'un moteur de traction de véhicule ferroviaire.

## Revendications

1. Gaine d'air (10), notamment pour un dispositif de climatisation, comportant une conduite flexible (12) présentant un profil ondulé, **caractérisée en ce que** la conduite flexible (12) est réalisée en silicone extrudé .

2. Gaine d'air (10) selon la revendication 1, dans laquelle le silicone présente une dureté d'environ 70 shores.

3. Gaine d'air (10) selon la revendication 1 ou 2, dans laquelle la conduite flexible (12) présente une forme générale en accordéon.

4. Gaine d'air (10) selon l'une quelconque des revendications précédentes, dans laquelle la conduite flexible (12) comporte une peau circonférentielle (13), s'étendant circonférentiellement entre une première extrémité circonférentielle (13A) et une seconde extrémité circonférentielle (13B), les première (13A) et seconde (13B) extrémités circonférentielles étant reliées entre elles, notamment par vulcanisation.

5. Gaine d'air (10) selon la revendication 4, dans laquelle la peau circonférentielle (13) comporte au moins une ouverture circonférentielle (14), de préférence deux ouvertures circonférentielles (14), s'étendant circonférentiellement entre une première embouchure à la première extrémité circonférentielle (13A), et une seconde embouchure à la seconde extrémité circonférentielle (13B), les première et seconde embouchures étant destinées à recevoir un pion de centrage commun.

6. Gaine d'air (10) selon l'une quelconque des revendications précédentes, dans laquelle la conduite flexible (12) présente une section transversale de forme générale rectangulaire.

7. Gaine d'air (10) selon l'une quelconque des revendications précédentes, dans laquelle la conduite flexible (12) s'étend longitudinalement entre une première extrémité longitudinale (12A) et une seconde extrémité longitudinale (12B), chacune reliée à un cadre d'extrémité (16) respectif.

8. Gaine d'air (10) selon la revendication 7, dans laquelle la conduite flexible (12) comporte une jupe circonférentielle (18) à chacune de ses première (12A) et seconde (12B) extrémités longitudinales, et chaque cadre d'extrémité (16) comporte des languettes (20) destinées à être recouvertes par la jupe circonférentielle (18) correspondante et à être reliées à cette jupe circonférentielle (18).

9. Procédé de fabrication d'une gaine d'air (10) selon l'une quelconque des revendications précédentes, **caractérisé en ce qu'**il comporte la réalisation de la conduite flexible (12) par extrusion de silicone.

## Patentansprüche

1. Luftkanal (10), insbesondere für eine Klimatisierungsvorrichtung, aufweisend eine flexible Leitung (12), die ein gewelltes Profil hat,
**dadurch gekennzeichnet, dass** die flexible Leitung (12) aus extrudiertem Silikon gemacht ist.

2. Luftkanal (10) gemäß Anspruch 1, wobei das Silikon eine Härte von etwa 70 Shore hat.

3. Luftkanal (10) gemäß Anspruch 1 oder 2, wobei die flexible Leitung (12) eine im Allgemeinen ziehharmonikaartige Form hat.

4. Luftkanal (10) gemäß irgendeinem der vorhergehenden Ansprüche, wobei die flexible Leitung (12) eine umfängliche Haut (13) aufweist, die sich umfänglich zwischen einem ersten Umfangsende (13A) und einem zweiten Umfangsende (13B) erstreckt, wobei das erste (13A) und das zweite (13B) Umfangsende miteinander verbunden sind, insbesondere mittels Vulkanisation.

5. Luftkanal (10) gemäß Anspruch 4, wobei die umfängliche Haut (13) wenigstens eine umfängliche Öffnung (14), bevorzugt zwei umfängliche Öffnungen (14), aufweist, die sich umfänglich zwischen einer ersten Mündung am ersten Umfangsende (13A) und einer zweiten Mündung am zweiten Umfangsende (13B) erstreckt, wobei die erste und die zweite Mündung dazu bestimmt sind, ein gemeinsames Zentrierstück aufzunehmen.

6. Luftkanal (10) gemäß irgendeinem der vorhergehenden Ansprüche, wobei die flexible Leitung (12) einen im Allgemeinen rechteckförmigen Querschnitt hat.

7. Luftkanal (10) gemäß irgendeinem der vorhergehenden Ansprüche, wobei sich die flexible Leitung (12) zwischen einem ersten Längsende (12A) und einem zweiten Längsende (12B) erstreckt, von denen jedes mit einem zugeordneten Endrahmen (16) verbunden ist.

8. Luftkanal (10) gemäß Anspruch 7, wobei die flexible Leitung (12) einen umfänglichen Rock (18) an jedem von ihrem ersten (12A) und ihrem zweiten (12B) Längsende aufweist, wobei jeder Endrahmen (16) Zungen (20) aufweist, die dazu bestimmt sind, von dem korrespondierenden umfänglichen Rock (18) abgedeckt zu werden und um mit diesem umfänglichen Rock (18) verbunden zu sein.

9. Verfahren zur Herstellung eines Luftkanals (10) gemäß irgendeinem der vorhergehenden Ansprüche, **dadurch gekennzeichnet, dass** es aufweist das Realisieren der flexiblen Leitung (12) mittels Extrudierens von Silikon.

## Claims

1. Air duct (10), specifically for an air conditioning system, comprising a flexible pipe (12) having a corrugated profile, **characterised in that** the flexible pipe (12) is made from extruded silicone

2. Air duct (10) according to claim 1, in which the silicone has a Shore hardness of approximately 70.

3. Air duct (10) according to claim 1 or claim 2, in which the flexible pipe (12) has the general shape of an accordion.

4. Air duct (10) according to any one of the preceding claims, in which the flexible pipe (12) includes a circumferential skin (13), extending circumferentially between a first circumferential end (13A) and a second circumferential end (13B), the first (13A) and second (13B) circumferential ends being interconnected by vulcanisation.

5. Air duct (10) according to claim 4, in which the circumferential skin (13) includes at least one circumferential opening (14), and preferably two circumferential openings (14), extending circumferentially between a first orifice at the first circumferential end (13A), and a second orifice at the second circumferential end (13B), the first and second orifices being designed to accommodate a common centring pin.

6. Air duct (10) according to any one of the preceding claims, in which the flexible pipe (12) has a transverse cross-section, generally rectangular in shape.

7. Air duct (10) according to any one of the preceding claims, in which the flexible pipe (12) extends longitudinally between a first longitudinal end (12A) and a second longitudinal end (12B), each connected to a respective end frame (16).

8. Air duct (10) according to claim 7, in which the flexible pipe (12) includes a circumferential skirt (18) at each of its first (12A) and second (12B) longitudinal ends, and each end frame (16) includes tabs (20) designed to be covered by the corresponding circumferential skirt (18) and to be connected to this circumferential skirt (18).

9. Method for manufacturing an air duct (10) according to any one of the preceding claims, **characterised in that** it includes manufacture of the flexible pipe (12) by silicone extrusion.
